# EUROPÄISCHE PATENTSCHRIFT

(11) **EP 0 369 351 B1**
(45) Veröffentlichungstag und Bekanntmachung des Hinweises auf die Patenterteilung: **07.09.1994**
(21) Anmeldenummer: 89120879.5
(22) Anmeldetag: 10.11.1989
(51) Int. Cl.: C23G 5/00, B29C 47/08

(54) **Reinigung polymerbehafteter Teile**
Cleaning of parts affected by polymers
Nettoyage de pièces contaminées par de polymères

(30) Priorität: 10.11.1988 DE 3838188
(43) Veröffentlichungstag der Anmeldung: 23.05.1990
(73) Patentinhaber: FOURNE MASCHINENBAU GMBH, D-53347 Alfter (DE)
(72) Erfinder: Fourné, Franz, D-5300 Bonn (DE)
(74) Vertreter: Bardehle, Heinz, Dipl.-Ing.

(56) Entgegenhaltungen:
- DE-A- 2 114 969
- DE-A- 2 804 616
- DE-A- 2 807 402
- GB-A- 822 834
- US-A- 4 078 143

## Beschreibung

Die vorliegende Erfindung betrifft ein Verfahren zum Entfernen von Polymermaterialien oder Kunststoffen, die an Teilen aus Metall oder Keramik, insbesondere Maschinenteilen, haften.

Aus der DE-OS 28 04 616 ist ein derartiges Verfahren bekannt, bei dem mit polymeren organischen Verbindungen behaftete Gegenstände zunächst erhitzt werden, um das polymere Material zum Schmelzen zu bringen, bei dem das geschmolzene Material von dem Gegenstand herab fallengelassen wird und bei dem schließlich der Gegenstand einer Behandlung bei erhöhter Temperatur unter Abbau des noch verbliebenen polymeren Materials ausgesetzt wird. Dieses Verfahren ist nur auf Kunststoffe anwendbar, die einen Schmelzpunkt haben, der erheblich unter deren Zersetzungstemperatur liegt, also beispielsweise auf Polystyrol und Polypropylen.

Aus der DE-A 21 14 969 ist ein Verfahren zum Reinigen von von Polyesterschmelze verunreinigten Apparaturen im montierten Zustand bekannt. Dabei werden Schmelze-lösende Substanzen während des Produktionsprozesses im Kreislauf über die zu reinigenden Apparaturen geführt und die anfallenden Abbauprodukte in den Produktionsprozeß zurückgeführt. Wichtig für dieses Verfahren ist, daß eine thermische Schädigung (Zersetzung) der Schmelze nicht stattfindet.

Der Erfindung liegt nun die Aufgabe zugrunde, ein Verfahren zum Entfernen von makromolekularem Material von höherschmelzenden Metall- oder Keramikteilen anzugeben, die mit dem zu entfernenden Material fest verbunden sind und die einer Pyrolysestufe unterworfen werden, wobei dieses Verfahren auch für solche makromolekularen Materialien einsetzbar sein soll, die nicht in einfacher Weise durch Schmelzen größtenteils von den zu behandelnden Metall- bzw. Keramikteilen entfernt werden können. Es geht also bei dem erfindungsgemäßen Verfahren darum, auch nicht oder nicht leicht schmelzbares makromolekulares Material von den entsprechenden Teilen weitgehend zu entfernen und dadurch die Dauer und den Umfang der nachfolgenden Pyrolysestufe zu reduzieren. Das zu schaffende Verfahren soll zudem einfach und kostengünstig durchführbar sein und einen möglichst insignifikanten apparativen Aufwand erfordern.

Erfindungsgemäß wird ein Verfahren der eingangs gekennzeichneten Art zur Verfügung gestellt wie es im Hauptanspruch definiert ist. Dabei werden die zu behandelnden Teile zunächst einer Gefügetrennbehandlung für das auf diesen Teilen vorhandene makromolekulare Material unterworfen. Diese Gefügetrennbehandlung besteht darin, daß das makromolekulare Material, insbesondere also der Kunststoff, mit einem Fluid in Kontakt gebracht wird, wobei das Fluid die Makromoleküle in kleinere Moleküle unter Ausbildung eines fließfähigen Mediums zerteilt, wobei das Medium das Produkt dieser Reaktion zwischen den Makromolekülen und dem Fluid enthält. Dieses fließfähige Medium wird nach dem erfindungsgemäßen Verfahren dann zunächst von dem behandelten Teil abfließen gelassen. Dadurch wird ein signifikanter Teil des makromolekularen Materials von dem behandelten Teil entfernt. Vorzugsweise werden bei dieser Stufe mehr als 70 - 80 Gew.-% des makromolekularen Materials von dem behandelten Teil entfernt. In der vorletzten Stufe wird dann das Teil noch einer Pyrolysebehandlung bei einer Temperatur von 400°C bis 530°C unterzogen. Im Anschluß an die Pyrolysebehandlung erfolgt vorzugsweise noch eine Nachbehandlung durch Kontaktieren des Teils mit einem oxidierenden Mittel, insbesondere freiem Sauerstoff.

Die gemäß der Erfindung zu behandelnden Teile sind insbesondere mechanische Bauelemente, die durch Kunststoff verschmutzt sind bzw. die von daran haftendem Kunststoff befreit und gereinigt werden müssen. Als solche Teile kommen insbesondere Maschinenteile, wie beispielsweise Düsen, Spinndüsen, Extruderteile, Rührer, Siebe, Pumpenpropeller, Gehäuse, Spritzgußformen, Kunststoffwerkzeuge und Filter in Frage. Die Materialien, die mit dem makromolekularen Material kontaminiert sind, sind insbesondere und verzugsweise höherschmelzende Metalle, insbesondere rostfreier Stahl, sowie Keramikmaterialien.

Die Gefügetrennbehandlung für die zu entfernenden makromolekularen Materialien besteht in einem Abbau der Makromoleküle mit Hilfe des Fluids. Es kann sich sowohl um die Auftrennung von echten chemischen Bindungen wie beispielsweise Estergruppierungen, als auch um die Auftrennung von Wasserstoffbrücken-Bildungen handeln. Die bevorzugten Gefügetrennbehandlungen sind die Hydrolyse und die Glykolyse. Bei der Hydrolyse wird vorzugsweise Wasserdampf eingesetzt. Diesem Wasserdampf können je nach dem zu entfernenden Kunststoff Mineralsäuren oder Alkalimetall-Hydroxide einschließlich Ammoniumhydroxid und Ammoniak zugesetzt werden.

Folgende Kunststoffe sind besonders für eine Hydrolyse mit zugesetzten Mineralsäuren, wie beispielsweise Salpetersäure, Schwefelsäure, Salzsäure, Phosphorsäure geeignet: Polyamide mit wäßriger Salpetersäure oder Phosphorsäure, Polyester mit wäßriger Salzsäure oder Salpetersäure.

Folgende Kunststoffe sind besonders für eine Hydrolyse in Gegenwart von Alkalimetall-Hydroxiden bzw. Ammoniak oder Ammoniumhydroxid geeignet: Polyacrylnitril oder -copolymere mit wäßriger Natron- oder Kalilauge.

Folgende Kunststoffe eignen sich besonders für die Glykolyse: Polyester mit Glykolen.

Bei der Glykolyse wird das zu entfernende makromolekulare Material mit Glykolen, insbesondere mit Ethylenglykol, in Berührung gebracht.

Bei einer bevorzugten Ausführungsform der Erfindung, die insbesondere bei folgenden Kunststoffen einsetzbar ist:
Polyamide, Polyester, Polycarbonate, wird eine Hydrolyse mit Abfluß des sich bildenden Mediums und anschließend eine Glykolyse durchgeführt, ebenfalls mit Entfernen des sich bildenden Mediums, und erst anschließend an die Pyrolyse.

Die bevorzugten Betriebsbedingungen für die Hydrolyse sind:

| | |
|---|---|
| Temperatur: | bis 450°C |
| Druck: | 20 mm WS - 1 bar (abs.) |
| Dauer: | 0,5 - 2 Std. |
| Konzentration der zugesetzten Mineralsäure, falls vorhanden: | 5 - 30 % |
| Konzentration des Alkalimetall-Hydroxids einschließlich Ammoniumhydroxid, falls vorhanden: | 10 - 30 % |
| Behandlung mit Luft-Dampfgemisch, Dampfpartialdruck: | 10 mm WS - 1 bar (abs.) |

Die bevorzugten Betriebsbedingungen bei der Glykolyse sind folgende:

| | |
|---|---|
| Temperatur | bis 285°C |
| Druck: | 20 mm WS - 1 bar (abs.) |
| Dauer: | 0,5 - 2 Std. |

Glykolyse in Gegenwart von Restbeständen an Luft, Wasserdampf, Zersetzungsgasen. Zur beschleunigten Zersetzung von Duroplasten läßt man in der ersten Heizphase Dimethylketon durch das Behandlungsgefäß strömen, bei Temperaturen bis ca. 300°C und bei einem Druck von 20 - 100 mm WS für die Dauer von 0,5 - 2 Stunden.

Die Hydrolyse bzw. Glykolyse erfolgt vorzugsweise bei einer Temperatur, die mindestens 70 C° unter der Temperatur der Pyrolysebehandlung liegt.

Das Ablaufenlassen des fließfähigen Mediums, das durch die Kontaktierung des makromolekularen Materials mit dem die Makromoleküle aufbrechenden Fluids gebildet wurde, erfolgt im allgemeinen bei demselben Druck und derselben Temperatur wie die Gefügetrennbehandlung, insbesondere also unter denselben Bedingungen, wie die Hydrolyse bzw. die Glykolyse. Die Dauer des Abfließenlassens hängt sowohl von den Abmessungen des behandelten Bauteils als auch von der Viskosität des erzeugten fließfähigen Mediums als auch von der eingesetzten Temperatur ab. In der Regel wird das Ablaufenlassen des fließfähigen Mediums von dem behandelten Teilen 0,5 bis 2 Std. dauern.

Bei einer Ausführungform der Erfindung wird die Effizienz des Ablaufenlassens des Hydrolyse- bzw. Glykolyseprodukts durch eine Gasströmung verbessert. So kann z.B. Stickstoff oder Kohlendioxid unter Druck durch die hydrolytisch oder glykolytisch behandelten Teile gepreßt werden, oder es kann ein "Luft-Messer" zum Abstreifen dieses Mediums eingesetzt werden.

Bei einem bevorzugten Verfahren wird das fließfähige Medium gesammelt und das abgebaute Makromolekularmaterial gewonnen und weiterverarbeitet. Vorzugsweise geschieht dies durch Abkühlen des Materials und Trennen des abgebauten Makromolekularmaterials von dem eingesetzten Fluid.

Bei der Pyrolysebehandlung der Teile wird das noch auf dem Teil vorhandene Material bei hoher Temperatur (400°C bis 530°C) zersetzt. Vorzugsweise erfolgt diese Zersetzung in Abwesenheit eines Oxidationsmittels, insbesondere in der Abwesenheit von freiem Sauerstoff. Die bevorzugten Betriebsbedingungen dieser Pyrolysebedingungen sind:

| | |
|---|---|
| Temperatur: | 400 bis 530°C |
| Druck: | 0,05 bis 0,2 bar (abs.) |
| Dauer: | 1 bis 2 Std. |

Bei einer weiteren bevorzugten Abwandlung des erfindungsgemäßen Verfahrens werden die Gefügetrennbehandlung und die Pyrolysebehandlung bei vermindertem Druck durchgeführt. Dabei ist es besonders bevorzugt, die Abgase einer solchen Behandlungsstufe einer Abscheidungsbehandlung auszusetzen, bevor diese Gase die den erniedrigten Druck erzeugenden Pumpe erreichen. Auf diese Weise können insbesondere korrosive Gase aus der Pyrolysebehandlung und auch aus der Abbaubehandlung für das makromolekulare Material von den korrosionsempfindlichen Pumpenteilen ferngehalten werden.

Das erfindungsgemäße Verfahren läßt sich insbesondere dann einsetzen, wenn die makromolekularen Materialien auf den Maschinenteilen nicht schmelzbar sind, wie dies beispielsweise bei Polyacrylnitril, Polyaramid und auch bestimmten Kautschuken sowie bei Duroplasten der Fall ist. Weiterhin läßt sich das erfindungsgemäße Verfahren dort einsetzen, wo die Polymere schneller vernetzen oder karbonisieren als schmelzen, d.h. also außerordentlich temperaturinstabil sind. Beispiele für solche Kunststoffe sind Polyamid 6.6; Polyamid 4.

Das erfindungsgemäße Verfahren ist auch dort einsetzbar, wo die makromolekularen Materialien, insbesondere also die Kunststoffe, zwar schmelzen, aber so langsam ablaufen, daß die zurückbleibenden Materialien eine zu lange Pyrolyse erfordern. Letzteres kann sich einfach aus der Form der zu reinigenden Teile ergeben. Schließlich läßt sich das erfindungsgemäße Verfahren dort einsetzen, wo die zu reinigenden Teile zwar die Pyrolysetemperatur für eine kurze Zeit aushalten können, man diese jedoch nicht einer ausgedehnten Pyrolyse aussetzen kann.

Das erfindungsgemäße Verfahren kann auch dadurch beschrieben werden, daß zunächst eine Depolymerisation der makromolekularen Materialien mit Hilfe von Chemikalien erfolgt, wobei eine dünnflüssige Masse erzeugt wird, die ablaufen kann und einfach pyrolysiert werden kann. Diese Depolymerisation kann bei machen Kunststoffen auch dazu führen, daß dann die tatsächlich erforderliche Temperatur für die Durchführung der abschließenden Pyrolyse niedriger liegen kann.

Das bevorzugte erfindungsgemäße Verfahren wird bei der Entfernung von Polyester eingesetzt, dabei wird in einer ersten Hydrolysestufe mit Wasserdampf und Vakuum gearbeitet, wobei diesem Wasserdampf vorzugsweise geringe Mengen von Salpetersäure oder Natronlauge zugesetzt werden.

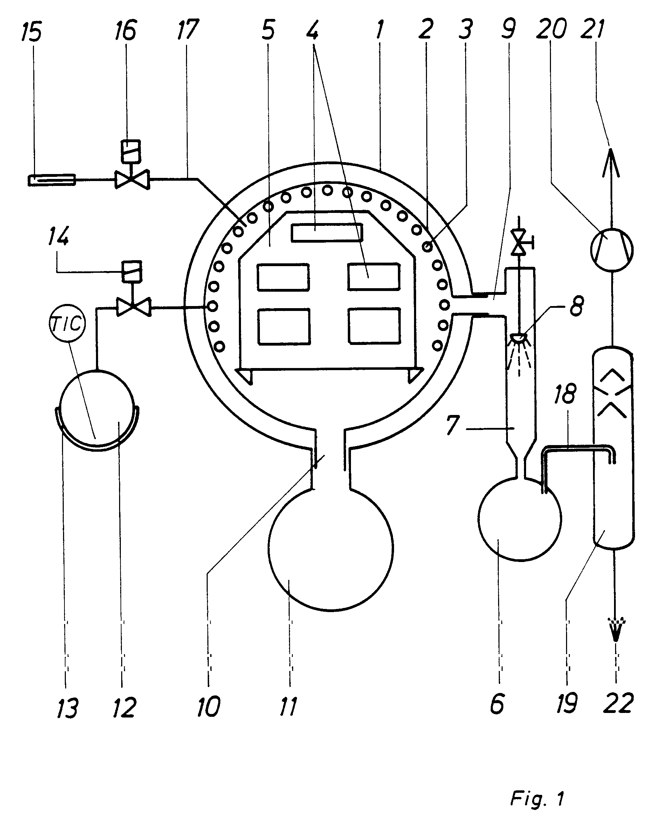

Die Arbeitsweise des erfindungsgemäßen Verfahrens wird im folgenden im Zusammenhang mit der beigefügten Zeichnung erläutert, die schematisch eine Apparatur zur Durchführung des erfindungsgemäßen Verfahrens zeigt.

In einem vakuumdicht verschließbaren Behandlungskessel 1 werden zu behandelnde Teile 4 auf einem Träger 5 angeordnet, der in den Kessel 1 eingefahren wurde. Dieser Kessel ist mit einer Innenisolierung 2 versehen und kann mit Hilfe von Strahlungsheizstäben 3 beheizt werden. Das Vakuum wird durch eine Vakuumpumpe 60 erzeugt. Dieser Vakuumpumpe ist eine Sprühkondensatoreinrichtung 7 mit einer Sprühdüse 8 vorgeschaltet. Diese können im Falle einer Wasserringpumpe direkt auf die Wasserringpumpe aufgesetzt werden und durch die Rohrverbindung 9 an den Behandlungskessel 1 angeschlossen werden.

Das ablaufende depolymerisierte Produkt läuft von den behandelten Teilen 4 durch ein Rohr 10 in einen kalten Abfallkessel 11. Dort kann sich dieses Material verfestigen und kann mit Hilfe einer nicht dargestellten herausnehmbaren Auffangschale aus dem Behälter 11 entfernt werden.

Die für die Hydrolyse benötigten Dämpfe sowie die ggfs. vorhandenen sauren oder alkalischen Zusätze werden in einem Kessel 12 mit Hilfe einer Heizung 13 vorzugsweise temperaturgesteuert erwärmt und über ein Ventil 14 vorzugsweise in Dampfform in den Behandlungsraum im Inneren des Behälters 1 eingebracht. Zusätzlich zu den die Depolymerisierung erzeugenden Materialien können auch noch Lösungsmittel für das makromolekulare Material eingesetzt werden, um die Verflüssigung des depolymerisierten Materials zu beschleunigen.

Nach Öffnen des Ventils 14, beispielsweise eines gesteuerten Magnetventils, strömt der Dampf in den Kessel 1, um die zu reinigenden Gegenstände herum, bewirkt die Hydrolyse des makromolekularen Materials, und der Rest des Behandlungsmittels sowie die entstehenden Gase strömen durch das Rohr 9 ab und werden von einer Vakuumpumpe 20 abgesaugt. Sich kondensierendes Material wird über die Leitung 6 aus dem Kondensator 7 abgezogen.

Die dünnflüssigen Abfallprodukte laufen während dieser Zeit in den Kessel 11 und werden von dort entnommen.

Es werden schließlich die restlichen Dämpfe aus dem Kessel 1 abgesaugt, und die Temperatur in dem Behandlungskessel 1 wird auf die Pyrolysetemperatur erhöht. Über ein Filter 15 und ein Ventil 16 sowie eine Leitung 17 wird dann vorzugsweise nach einer gewissen Zeit Luft in den Kessel 1 angesaugt, wobei das Vakuum entsprechend reduziert wird. Dadurch erfolgt ein Verbrennen der letzten noch auf den Oberflächen der zu behandelnden Teile 4 vorhandenen Materialien.

Es ist auch möglich, weitere Hydrolysestufen durchzuführen oder im Anschluß zusätzlich noch eine Glykolyse auszuführen.

Am Ende des Verfahrens wird der Behandlungskessel 1 belüftet, geöffnet und die gereinigten Maschinenteile werden entnommen.

Falls nicht alle Gase in dem Kondensator 7 gelöst werden, ist noch ein weiterer Abscheider 19 vorgesehen. In diesem Abscheider 19 können sowohl Tröpfchen abgeschieden werden aus dem durch eine Pumpe 20 angesaugten Gas als auch weitere Reinigungsstufen für das Gas durchgeführt werden. Das gereinigte Gas wird über eine Abzugleitung 21 entfernt, während das Abwasser bei 22 entnommen wird.

Bei einigen Reinigungsverfahren kann auch eine Nachreinigung durchgeführt werden, indem vorteilhaft mittels Ansaugen von Wasser und/oder Lösemittel-Mischungen oder Säuren oder Alkali aus einem Behälter (12) durch ein Ventil (14), besonderes wenn noch organische Farbstoffe auf den zu reinigenden Metalloberflächen haften, diese Oberflächen mit dem Nachreinigungsmittel in Kontakt gebracht werden.

Der Vorteil des hier beschriebenen Verfahrens liegt darin, daß der Kunststoff in der ersten Heizphase durch die Hydrolyse eine wesentlich geringere Viskosität erhält und dadurch schneller abfließen kann, und daß die Zersetzung in der zweiten Phase an einem entsprechenden dünneren Film, der noch an der Oberfläche haftet, einfacher und schneller und evtl. bei niedrigerer Temperatur verläuft.

So sinkt z.B. die Schmelzviskosität von Polyethylentherephthalat mit einer intrinsic Viskosität von IV = 0,63 - 0,65 entspr. ca. 220 Pa x sec bei 320°C durch Hydrolyse mit Wasserdampf auf ca. 20 - 30 Pa x sec. Außerdem steigt die Zersetzungsrate bei der trockenen Pyrolyse von ca. 1000 g/m² x h hierbei auf ca. 2000 g/m² x h bei dem niedrigmolekularen Zwischenprodukt bei 480°C Umgebungstemperatur. Der Restfilm auf der Metalloberfläche in der Größenordnung von einigen 10 g/m² sinkt durch die Hydrolyse auf einige g/m², so daß die anschließende Nachverbrennung bzw. Oxydation mit Luft im Vakuum in ebenfalls kürzerer Zeit abläuft.

Alles das sind wesentliche Verbesserungen der bisher bekannten Pyrolyse-Reinigungsprozesse.

Bei einigen Polymeren ist es auch möglich, die Verfahrensstufe der Hydrolyse bei Normaldruck mit überhitztem Wasserdampf durchzuführen, ohne ein entsprechendes Vakuum im Kessel zu erzeugen. Dies trifft insbesondere zu für Polyethylentherephthalat, das in Wasserdampf auf ca. 350°C für 1 - 2 Stunden geheizt wird und erst im Anschluß hieran die beschriebene Pyrolyse des nicht abgelaufenen Restfilmes bei 450 - 520°C erfolgt.

Als weiteres Beispiels seien aromatische Polyamide genannt, die nicht oder nur unter Zersetzung schmelzbar sind. Wenn der LOY-Wert (=Limiting Oxygen Index) größer als 21 ist, sind diese Materialien außerdem in Luft nicht brennbar. Hierbei kann man die Vorreinigung mittels Schwefelsäure-Wasserdampf oder Dampf von wäßriger Natronlauge einleiten, bei Temperaturen um 320 - 350°C, und anschließend pyrolysieren bei 520 - 530°C, und den sehr geringen Rest zum Schluß mit Luft nachverbrennen, bei 0,5 bar und ca. 520°C. Auch hierbei erhält man metallisch reine Guts-Oberflächen.

Polyetherketon (PEK) ist zwar bei 366°C schmelzbar, hat aber selbst bei 400°C noch eine Viskosität, die ein freies Ablaufen verhindert. Leitet man nun in den Kessel 12 eine Wasser-Salpetersäure-Mischung von 50 : 50 % ein, so wird nach Erreichen von 300°C im Kessel 1 bzw. im Behandlungsraum 5 innerhalb von kurzer Zeit nach Öffnen des Ventils 14 das PEK auf den Metalloberflächen abgebaut und läuft ab, so daß nur ein sehr dünner Film auf den Metalloberflächen verbleibt, der pyrolysiert werden kann, was bei 480°C auch durch den Wasser-Salpetersäure-Zusatz im Vakuum wesentlich beschleunigt wird.

Beim Einsatz von Säure- und Alkalizusätzen kann es zweckmäßig sein, daß das ganze Innere des Apparates in nichtrostendem Edelstahl ausgeführt wird.

## Patentansprüche

1. Verfahren zum Entfernen von makromolekularem Material von höherschmelzenden Metallteilen oder Keramikteilen, die mit dem zu entfernenden Material fest verbunden sind, und bei dem die Teile einer Pyrolysebehandlung unterzogen werden,
**dadurch gekennzeichnet**, daß
(1) ein solches Teil mit dem zu entfernenden Material einer Gefügetrennbehandlung für dieses Material unterworfen wird, in welcher ein Fluid mit dem zu entfernenden Material in Verbindung gebracht wird, wobei das Fluid die Makromoleküle des Materials in kleinere Moleküle unter Ausbildung eines fließfähigen Mediums aufteilt, wobei das Medium das Produkt dieser Gefügetrennbehandlung und des Materials mit dem Fluid enthält,
(2) das fließfähige Medium von dem Teil abfließen gelassen und damit von dem Teil entfernt wird,
(3) das Teil einer Pyrolysebehandlung bei einer Temperatur von 400°C bis 530°C und vorzugsweise in Anwesenheit eines Radikalbildners, insbesondere freien Sauerstoffs, ausgesetzt wird, bei der auf dem Teil vorhandenes Material pyrolisiert wird.

2. Verfahren nach Anspruch 1, dadurch gekennzeichnet, daß die Gefügetrennbehandlung eine Hydrolyse oder Glykolyse von hydrolysierbarem bzw. glykolysierbarem Kunststoff umfaßt.

3. Verfahren nach Anspruch 2, dadurch gekennzeichnet, daß die Hydrolyse bei einer Temperatur erfolgt, die um mehr als 70 C° unter der Temperatur der Pyrolysebehandlung liegt.

4. Verfahren nach einem der vorhergehenden Ansprüche, dadurch gekennzeichnet, daß die Hydrolysebehandlung durch Kontaktieren des hydrolysierbaren Kunststoffs mit Dampf erfolgt, vorzugsweise mit Dampf, dem Mineralsäure oder Alkalimetallhydroxid einschließlich Ammoniumhydroxid und Ammoniak zugesetzt wurde.

5. Verfahren nach einem der vorhergehenden Ansprüche, dadurch gekennzeichnet, daß als zu behandelndes Teil ein Teil eingesetzt wird, dessen mit dem zu entfernenden Material verbundene Oberfläche aus hochschmelzendem Metall, vorzugsweise Edelstahl besteht.

6. Verfahren nach einem der vorhergehenden Ansprüche, dadurch gekennzeichnet, daß die Hydrolyse bei einem erniedrigten Druck bis zu 0,8 bar absolut durchgeführt wird.

7. Verfahren nach einem der vorhergehenden Ansprüche, dadurch gekennzeichnet, daß das fließfähige Medium in ein kaltes Auffanggefäß fließen gelassen wird.

8. Verfahren nach Anspruch 6, dadurch gekennzeichnet, daß die Hydrolysegase vor Erreichen einer dem Druck der Hydrolysebehandlung erniedrigenden Pumpe einer Reinigungsstufe, insbesondere einer Abscheidung, unterworfen werden.

9. Verfahren nach einem der vorhergehenden Ansprüche, dadurch gekennzeichnet, daß die Gefügetrennbehandlung und die Pyrolysebehandlung des Teils in ein und demselben Behälter erfolgt.

10. Verfahren nach einem der vorhergehenden Ansprüche, dadurch gekennzeichnet, daß die Abgase der Gefügetrennbehandlung bzw. die Abgase der Pyrolysebehandlung einer Sprühreinigung und ggfls. anschließend einer Tröpfchenabscheidung unterzogen werden.

## Claims

1. Process for removing macromolecular material from higher-melting metal components or ceramic components which are firmly bonded to the material to be removed, and in which the components are subjected to pyrolytic treatment, characterised in that
(1) a component of this kind, together with the material to be removed, is subjected to structural separation treatment for this material, in which a fluid is brought into contact with the material to be removed, the fluid splitting the macromolecules of the material into smaller molecules, thereby forming a flowable medium, the medium containing the product of this structural separation treatment and the material together with the fluid,
(2) the flowable medium is allowed to flow off the component and is thus removed from the component,
(3) the component is subjected to pyrolytic treatment at a temperature of 400°C to 530°C, preferably in the presence of a radical former, especially free oxygen, in which material present on the component is pyrolysed.

2. Process according to claim 1, characterised in that the structural separation treatment includes the hydrolysis or glycolysis of hydrolysable or glycolysable plastic.

3. Process according to claim 2, characterised in that the hydrolysis is effected at a temperature more than 70°C below the temperature of the pyrolytic treatment.

4. Process according to one of the preceding claims, characterised in that the hydrolytic treatment is effected by contacting the hydrolysable plastic with steam, preferably with steam to which mineral acid or alkali metal hydroxide, including ammonium hydroxide and ammonia, has been added.

5. Process according to one of the preceding claims, characterised in that the component to be treated is a component the surface of which bonded to the material to be removed consists of a high-melting metal, preferably high-grade steel.

6. Process according to one of the preceding claims, characterised in that the hydrolysis is effected at a reduced pressure of up to 0.8 bar absolute pressure.

7. Process according to one of the preceding claims, characterised in that the flowable medium is allowed to flow into a cold collection vessel.

8. Process according to claim 6, characterised in that the hydrolysis gases are subjected to a cleaning stage, particularly separation, before they reach a pump reducing the pressure of the hydrolytic treatment.

9. Process according to one of the preceding claims, characterised in that the structural separation treatment and the pyrolytic treatment of the component are effected in one and the same container.

10. Process according to one of the preceding claims, characterised in that the waste gases from the structural separation treatment or the waste gases from the pyrolytic treatment are subjected to spray cleaning and then optionally to droplet precipitation.

## Revendications

1. Procédé pour l'élimination d'une matière macromoléculaire qui adhère à des pièces métalliques ou des pièces céramiques, à point de fusion très élevé et liées à la matière à éliminer, les pièces étant soumises à un traitement par pyrolyse,
caractérisé en ce que
(1) une telle pièce, comportant la matière à éliminer, est soumise à un traitement de séparation de structure pour cette matière, dans lequel un fluide est mis en contact avec la matière à éliminer, le fluide divisant les macromolécules de la matière en molécules plus petites en formant un milieu fluide, le milieu contenant le produit de ce traitement de séparation de structure et de la matière avec le fluide,
(2) le milieu fluide est évacué de la pièce et ainsi éloigné de la pièce,
(3) la pièce est soumise à un traitement par pyrolyse à une température de 400°C à 530°C et, de préférence, en présence d'un élément de formation de radicaux, en particulier de l'oxygène libre, traitement pendant lequel la matière présente sur la pièce est pyrolysée.

2. Procédé selon la revendication 1, caractérisé en ce que le traitement de séparation de structure comprend une hydrolyse ou une glycolyse de matière plastique hydrolysable ou bien glycolysable.

3. Procédé selon la revendication 2, caractérisé en ce que l'hydrolyse est effectuée à une température qui se situe à plus de 70°C au-dessous de la température du traitement par pyrolyse.

4. Procédé selon l'une des revendications précédentes, caractérisé en ce que le traitement par pyrolyse s'effectue par mise en contact de la matière plastique hydrolysable avec de la vapeur, de préférence de la vapeur à laquelle a été ajouté un acide minéral ou un hydroxyde de métal alcalin, comprenant l'hydroxyde d'ammonium et d'ammoniac.

5. Procédé selon l'une des revendications précédentes, caractérisé en ce que, en tant que pièce à traiter, on utilise une pièce dont la surface, liée à la matière à éliminer, consiste en un métal à point de fusion élevé, de préférence de l'acier fin.

6. Procédé selon l'une des revendications précédentes, caractérisé en ce que l'hydrolyse est effectuée à une pression absolue réduite jusqu'à 0,8 bar.

7. Procédé selon l'une des revendications précédentes, caractérisé en ce que le milieu fluide est évacué dans un récipient récepteur froid.

8. Procédé selon la revendication 6, caractérisé en ce que les gaz d'hydrolyse sont soumis, avant d'atteindre une pompe réduisant la pression du traitement par hydrolyse, à une opération d'épuration, notamment à une séparation.

9. Procédé selon l'une des revendications précédentes, caractérisé en ce que le traitement de séparation de structure et le traitement par pyrolyse de la pièce sont effectués dans un seul et même récipient.

10. Procédé selon l'une des revendications précédentes, caractérisé en ce que les effluents gazeux du traitement de séparation de structure et les effluents gazeux du traitement par pyrolyse sont soumis à un nettoyage par pulvérisation et, le cas échéant, ensuite à une séparation des gouttes.
